# EUROPÄISCHE PATENTSCHRIFT

(11) **EP 4 531 534 B1**
(45) Veröffentlichungstag und Bekanntmachung des Hinweises auf die Patenterteilung: **13.05.2026**
(21) Anmeldenummer: 23717120.2
(22) Anmeldetag: 03.04.2023
(51) Int. Cl.: A01B 15/06

(54) **HARTMETALLSCHUTZ FÜR PFLUGANLAGEN**
HARD METAL PROTECTION FOR PLOUGH UNITS
PROTECTION EN MÉTAL DUR POUR UNITÉS DE CHARRUE

(30) Priorität: 03.06.2022 DE 102022114177
(43) Veröffentlichungstag der Anmeldung: 09.04.2025
(73) Patentinhaber: Betek GmbH & Co. KG, 78733 Aichhalden (DE)
(72) Erfinder: KRÄMER, Ulrich, 77709 Wolfach (DE); SEIFRIED, Fabian, 78662 Herrenzimmern (DE)
(74) Vertreter: Herrmann, Jochen
(86) Internationale Anmeldenummer: PCT/EP2023/058682
(87) Internationale Veröffentlichungsnummer: WO 2023/232321

(56) Entgegenhaltungen:
- WO-A1-82/04375
- US-A- 1 243 378
- US-A- 2 312 371
- US-A1- 2003 188 463

## Beschreibung

Die Erfindung betrifft eine Pfluganlage zur Verwendung mit einem Pflug, wobei die Pfluganlage einen Anlagenkörper mit einer Ableitseite, einer der Ableitseite gegenüberliegenden Rückseite und einer die Ableitseite und die Rückseite verbindenden Unterseite aufweist, wobei der Anlagenkörper Verschleißschutzelement-Aufnahmen aufweist, in denen Verschleißschutzelemente aus Hartmaterial aufgenommen sind.

Pfluganlagen der oben genannten Art werden mit Pflügen zur Bodenbearbeitung, insbesondere zur Bearbeitung eines Ackerbodens verwendet. Der Pflug dient zum Wenden und Lockern des Bodens. Hierbei wird der Pflug in einer Bearbeitungsrichtung durch den Boden gezogen, wodurch eine Furche in den Boden geschnitten wird. Üblicherweise umfasst ein Pflug eine Schar mit einer Scharspitze, um die Furche in den zu bearbeitenden Boden zu schneiden. Ein sich an die Schar anschließendes Streichbrett dient zum Ableiten und Wenden des von der Schar geschnittenen Materials. Hierbei entstehen auf den Pflug zum einen Kräfte in Richtung des Furchenrandes und zum anderen in Richtung des Furchengrundes. Zur Aufnahme der Kräfte, die in Richtung des Furchenrandes wirken, wird üblicherweise eine an dem Pflug angebrachte Pfluganlage verwendet. Bei einer Pfluganlage kann es sich um ein Bauteil mit einem plattenförmigen Anlagenkörper handeln, das sich in Bearbeitungsrichtung mittelbar oder unmittelbar an die Schar anschließt und mit seiner Längserstreckung im Wesentlichen in der Bearbeitungsrichtung ausgerichtet ist. Die Pfluganlage liegt hierbei mit ihrer Ableitseite an dem Furchenrand und mit ihrer Unterseite am Furchengrund an. Die auf den Pflug wirkenden Kräfte in Richtung des Furchenrandes werden zumindest teilweise über die Ableitseite an dem Furchenrand abgestützt. Darüber hinaus werden auch die Kräfte in Richtung des Furchenbodens zumindest teilweise auf die Pfluganlage übertragen, sodass diese mit ihrer Unterseite an den Furchenboden gedrückt wird. Dementsprechend unterliegen Pfluganlagen an der Ableitseite und an der Unterseite einem hohen Verschleiß durch das vorbeigleitende Material.

Pfluganlagen werden üblicherweise aus wenig verschleißfesten Materialien wie einfachen Baustählen gefertigt. Um die Pfluganlage vor übermäßigem Verschleiß zu schützen, ist es bekannt, insbesondere die Ableitseite mit plattenförmigen Verschleißschutzelementen aus einem verschleißfesten Hartmaterial zu versehen. Hierzu werden bei bekannten Pfluganlagen Verschleißschutzelement-Aufnahmen in Form von Ausnehmungen, die meist in die Ableitseite eingefräst sind, vorgesehen. In die Verschleißschutzelement-Aufnahmen werden Verschleißschutzelemente eingesetzt, die plattenförmig ausgestaltet sind.

Eine Pfluganlage mit Keramikeinsätzen zur Erhöhung der Verschleißfestigkeit ist aus der WO 8204375 A1 bekannt. Die Pfluganlage besteht aus einer perforierten Stahlplatte, die mittels Schrauben an einem Pflug befestigt ist. In die Perforationen der Stahlplatte sind Plättchen aus Sinterkeramik eingesetzt und mittels einer Klebung gesichert.

Wird nun eine Pfluganlage bei der Bodenbearbeitung durch den Boden gezogen, wird auf die Ableitseite und auf die Unterseite der Pfluganlage durch das abgleitende Material ein hoher Verschleißdruck ausgeübt. Hierbei wird zunächst das weniger verschleißfeste Material des Anlagenkörpers ausgewaschen, sodass die Verschleißschutzelemente mit der Zeit teilweise freigelegt werden und somit den einwirkenden Kräften des abgleitenden Materials stärker ausgesetzt sind. Hierdurch entsteht insbesondere bei plattenförmigen Verschleißschutzelementen die Gefahr, dass es an den Kanten der Verschleißschutzelemente zu Brüchen kommt, insbesondere wenn diese aus sprödem Hartmaterial gefertigt sind.

Auch kann ein Auswaschen des Materials des Anlagenkörpers dazu führen, dass die Verschleißschutzelemente nicht mehr ausreichend an dem Anlagenkörper gehalten und/oder gestützt sind. Dementsprechend können einwirkende Stoßbelastungen nicht von dem vergleichsweise zähen Anlagenkörper aufgenommen werden und die Gefahr eines Bruchs des Hartmaterials wird vergrößert. Auch können die Verschleißschutzelemente verlorengehen, wenn die Auswaschung weiter fortschreitet.

Wie bereits erwähnt, ergibt sich ein hoher Verschleißdruck nicht nur auf die Ableitseite, sondern auch auf die Unterseite. Selbst wenn die Unterseite durch Verschleißschutzelemente geschützt wird, ergibt sich hier eine ähnliche Situation wie an der Ableitseite. So wird auch an der Unterseite zunächst das Material des Anlagenkörpers ausgewaschen, wodurch die Verschleißschutzelemente den bereits oben beschriebenen Gefahren des Bruchs und/oder des Verlorengehens ausgesetzt sind.

Aus einem frühen Verschleiß der Pfluganlage ergeben sich zunächst geringe Standzeiten der Pfluganlage. Hieraus resultiert der Bedarf eines häufigeren Austauschs der Pfluganlage, wodurch ein erhöhter Teile- und Zeitaufwand entsteht. Auch entstehen Ausfallzeiten in der Bodenbearbeitung. Ein Verlust von Verschleißschutzelementen ist wegen der hohen Kosten von Hartmaterial nachteilig. Ferner ist es aber auch im Hinblick auf spätere Bearbeitungen des Bodens unerwünscht, wenn Hartmaterialelemente im Boden verbleiben.

Um den beschriebenen Nachteilen entgegenzuwirken, kann bei bekannten Pfluganlagen beispielsweise eine große Menge an teurem Hartmaterial eingesetzt werden, um eine möglichst große Fläche der Ableitseite und gegebenenfalls der Unterseite abzudecken und so Auswaschungen des Anlagenkörpers zu reduzieren. Auch kann ein hoher Aufwand betrieben werden, um die Verschleißschutzelement-Aufnahmen derart zu gestalten, dass die Verschleißschutzelemente möglichst sicher an dem Anlagenkörper gehalten sind. Hieraus resultieren hohe Kosten aus dem erforderlichen Material- und Fertigungsaufwand.

Aufgabe der Erfindung ist es, eine Pfluganlage bereitzustellen, die bei einer einfachen Konstruktion und kostengünstigen Herstellbarkeit eine hohe Verschleißbeständigkeit aufweist.

Die Aufgabe wird dadurch gelöst, dass die Verschleißschutzelement-Aufnahmen in die Unterseite eingebracht sind, und dass die Verschleißschutzelemente vorzugsweise als Stifte ausgeführt sind.

Wie oben ausgeführt, wird der Verwendung von plattenförmigen Verschleißschutzelementen eine große Menge an Hartmaterial benötigt, um einen zuverlässigen Verschleißschutz der Ableitseite und der Unterseite gewährleisten zu können. Die Erfinder haben nun erkannt, dass sich ein hoher Schutz gegenüber Verschleiß bei einem erheblich reduzierten Materialeinsatz durch die Verwendung von stiftförmigen Verschleißschutzelementen erreichen lässt.

Unter stiftförmigen Verschleißschutzelementen sind hierbei Elemente zu verstehen, die beispielsweise zylindrisch oder kegelförmig gestaltet sind. Es sind jedoch auch stiftförmige Verschleißschutzelemente denkbar, die einen elliptischen oder polygonalen, insbesondere einen rechteckigen Querschnitt aufweisen. Ein Verschleißschutzelement kann aus einem Schaft bestehen, an den sich beispielsweise ein Kopf anschließen kann. Vorzugsweise ist ein Stift länglich und weist dementsprechend entlang seiner Mittellängsachse eine größere Erstreckung auf als quer zu dieser. Jedoch kann ein erfindungsgemäßes stiftförmiges Verschleißschutzelement auch dergestalt sein, dass seine Erstreckung in Richtung der Mittellängsachse geringer ist als diejenige quer zur Mittellängsachse. Als Stifte ausgeführte Verschleißschutzelemente weisen gegenüber plattenförmigen Verschleißschutzelementen ein geringeres Bruchrisiko auf. Insbesondere weisen stiftförmige Verschleißschutzelemente keine oder zumindest eine geringere Anzahl und/oder weniger scharfe bruchgefährdete Kanten auf. Dies gilt in besonderem Maße, wenn die Verschleißschutzelemente zumindest teilweise zylindrisch oder elliptisch gestaltet sind. Jedoch weisen auch Verschleißschutzelemente, die zumindest teilweise einen polygonalen Querschnitt aufweisen, gegenüber plattenförmigen Verschleißschutzelementen ein verringertes Risiko eines Kantenbruchs auf. Die verwendeten Verschleißschutzelemente können somit für den jeweils vorgesehenen Einsatzzweck hinsichtlich der Bruchgefahr optimiert ausgestaltet werden.

Als Stifte ausgeführte Verschleißschutzelemente können einfach und kostengünstig hergestellt werden, beispielsweise durch Sintern. Als Hartmaterialen können insbesondere Hartmetalle oder Keramikwerkstoffe zum Einsatz kommen. Bevorzugt kann vorgesehen sein, dass die Härte des Hartmaterials der Verschleißschutzelemente mindestens der doppelten Härte des Materials des Anlagenkörpers entspricht.

Die Positionierung der Verschleißschutzelemente kann entsprechend der Lage besonders von Verschleiß betroffener Bereiche der Pfluganlage optimiert vorgenommen werden. Dadurch, dass die Verschleißschutzelement-Aufnahmen in die Unterseite eingebracht sind, ist auch die Unterseite vor Verschleiß geschützt. Die Positionierung der Verschleißschutzelemente kann somit gezielt gestaltet werden.

Gemäß einer bevorzugten Erfindungsvariante kann vorgesehen sein, dass die Verschleißschutzelement-Aufnahmen als Bohrungen ausgeführt sind. Bohrungen sind im Fertigungsprozess mit einem erheblich geringeren Aufwand verbunden als Ausfräsungen.

Wenn ferner vorgesehen ist, dass die Verschleißschutzelement-Aufnahmen die Ableitseite und/oder die Rückseite nicht schneiden, lassen sich die Bohrungen besonders einfach fertigen. Auch ergibt sich hieraus eine sichere Aufnahme der Verschleißschutzelemente. Die Verschleißschutzelemente sind somit in der Verschleißschutzelement-Aufnahme besonders gut abgestützt. Insbesondere kann hierdurch das Risiko von Unterwaschungen des Anlagenkörpers im Bereich der Verschleißschutzelement-Aufnahmen reduziert werden. So ist es denkbar, dass zwischen den Verschleißschutzelement-Aufnahmen und der Vorder- und/oder Rückseite noch eine verbleibende Materialstärke erhalten bleibt. Vorzugsweise kann ein Durchmesser einer Verschleißschutzelement-Aufnahme mindestens 2 mm kleiner sein als eine Materialstärke des Anlagenkörpers. Beispielsweise kann eine Materialstärke des Anlagenkörpers mindestens 13 mm betragen und der Durchmesser einer Verschleißschutzelement-Aufnahme höchstens 11 mm, bevorzugt die Materialstärke mindestens 10 mm betragen und der Durchmesser höchstens 8 mm.

Auch kann auf diese Weise auf eine zusätzliche Sicherung in Richtung der der Ableitseite und der Rückseite gegebenenfalls verzichtet werden.

Erfindungsgemäß kann es auch vorgesehen sein, dass an dem Anlagenkörper im Bereich der Unterseite ein Absatz vorgesehen ist, derart, dass die Unterseite zumindest teilweise von dem Absatz gebildet ist, wobei der Absatz in Richtung der Längserstreckung der Unterseite, vorzugsweise durchgehend, verläuft.

Bei dem Absatz kann es sich beispielsweise um einen Plattenabschnitt handeln, der mit dem Anlagenkörper vorzugsweise stoffschlüssig, beispielsweise durch Schweißen, oder kraft- und/oder formschlüssig, beispielsweise durch eine Schraubverbindung, verbunden ist. Es ist jedoch auch denkbar, dass der Absatz einteilig an dem Anlagenkörper angeformt ist. Der Absatz kann ausgehend von der Unterseite eine geringere Höhe haben als die gesamte Anlagenhöhe.

Mit dem Absatz kann eine erhöhte Biegesteifigkeit der Pfluganlage erreicht werden. Zusätzlich kann durch den Absatz im verschleißgefährdeten Bereich der Unterseite mehr Material zur Verfügung gestellt werden. Dadurch, dass die Unterseite zumindest teilweise von dem Absatz gebildet ist, kann auch eine vergrößerte Unterseite erreicht werden. Durch die Wahl einer geeigneten Absatz-Materialstärke kann die erwünschte Größe der Unterseite gezielt beeinflusst werden. Somit kann dann beispielsweise eine größere Anzahl von Verschleißschutzelementen in die Unterseite eingebracht werden. Auch ergibt sich eine größere Gestaltungsfreiheit bei der Anordnung der Verschleißschutzelement-Aufnahmen bzw. Verschleißschutzelemente.

Eine erfindungsgemäße Pfluganlage kann dergestalt sein, dass die Verschleißschutzelemente einen Schaft aufweisen, dass die Verschleißschutzelement-Aufnahmen eine Schaftaufnahme aufweisen, die zumindest teilweise korrespondierend zu dem Schaft ausgebildet ist, und dass der Schaft vorzugsweise vollständig in der Schaftaufnahme aufgenommen ist.

Der Schaft kann beispielsweise zylindrisch oder kegelförmig gestaltet sein. Es sind jedoch auch Schäfte mit einem elliptischen oder polygonalen, insbesondere einem rechteckigen Querschnitt denkbar. Durch die zumindest teilweise korrespondierende Ausgestaltung des Schafts und der Schaftaufnahme ergibt sich eine sichere Abstützung des Verschleißschutzelements.

Denkbar ist es, eine Passung zwischen dem Schaftdurchmesser und dem Aufnahmedurchmesser vorzusehen, sodass die Verschleißschutzelemente durch die Aufnahme des Schafts in der Schaftaufnahme zumindest teilweise kraft- und/oder formschlüssig gehalten sind. Vorzugsweise ist jedoch eine Gestaltung vorgesehen, die ein ausreichendes Spiel zulässt, sodass der Schaft ohne Kraftaufwand oder zumindest mit einem geringen Kraftaufwand in die Schaftaufnahme eingesetzt werden kann.

Wenn weiter vorgesehen ist, dass die Verschleißschutzelemente in den Verschleißschutzelement-Aufnahmen zumindest teilweise durch eine stoffschlüssige Verbindung, bevorzugt eine Lötverbindung, gehalten sind, ergibt sich eine einfach zu fertigende und sichere Befestigung der Verschleißschutzelemente. Beispielsweise ist es auch denkbar, dass zunächst ein Klebstoff in die Verschleißschutzelement-Aufnahme eingebracht wird und daraufhin das Verschleißschutzelement eingesetzt wird. Bevorzugt ist es jedoch vorgesehen, dass die Verschleißschutzelemente in den Verschleißschutzelement-Aufnahmen zumindest teilweise mittels einer Lötverbindung gehalten sind. Hierzu kann zunächst ein Lotmaterial und gegebenenfalls ein Flussmittel in die Verschleißschutzelement-Aufnahme eingebracht werden. Im Anschluss kann das Verschleißschutzelement eingesetzt werden. Die Pfluganlage kann dann, beispielsweise in einem Ofen, erhitzt werden, um die Lötverbindung herzustellen. Besonders vorteilhaft kann dabei die Pfluganlage derart ausgerichtet werden, dass die Verschleißschutzelemente zumindest teilweise unter Wirkung ihrer Gewichtskraft in die Verschleißschutzelement-Aufnahmen gedrückt werden. Es ergibt sich somit ein einfaches Verfahren zur Herstellung einer sicheren Aufnahme und Halterung der Verschleißschutzelemente in den Verschleißschutzelement-Aufnahmen. Auch eine Kombination von form- und/oder kraft- und/oder stoffschlüssigen Verbindungen ist selbstverständlich denkbar.

Gemäß einer vorteilhaften Ausgestaltung der Erfindung wird vorgeschlagen, dass die Verschleißschutzelemente entlang einer Längserstreckung des Anlagenkörpers angeordnet sind. Die Längserstreckung kann parallel, weitgehend parallel oder schräg zu der Ableitseite und der Unterseite der Pfluganlage verlaufen. Die Anordnung von Verschleißschutzelementen entlang der Längserstreckung des Anlagenkörpers kann dabei entsprechend des Einsatzzwecks gewählt werden. Vorteilhaft wird eine aufsummierte Länge von mindestens 15 % der Längserstreckung des Anlagenkörpers mit Verschleißschutzelementen bestückt. Dementsprechend kann bei einer kurzen Pfluganlage bereits ein Verschleißschutzelement ausreichend sein. Bei längeren Pfluganlagen kann entsprechend eine höhere Anzahl von Verschleißschutzelementen sinnvoll sein. Zur Reduktion einer Bruchgefahr der Verschleißschutzelemente ist es vorteilhaft, die Verschleißschutzelemente voneinander beabstandet vorzusehen. Ein Abstand zwischen Verschleißschutzelementen kann vorzugsweise derart sein, dass er nicht größer ist als das Fünfundzwanzigfache, bevorzugt nicht größer als das Fünffache, besonders bevorzugt nicht größer als das Dreifache des Durchmessers eines Verschleißschutzelements ist.

Ferner kann vorgesehen sein, dass Abstände zwischen den Verschleißschutzelementen konstant oder variabel sind. Hierbei ist es denkbar, dass in Bereichen, die einem hohen Verschleißdruck ausgesetzt sind, die Verschleißschutzelemente in einem geringeren Abstand zueinander angeordnet werden. Dies kann beispielsweise in Bereichen in der Nähe der Schar der Fall sein. In weniger belasteten Bereichen können die Abstände beispielsweise größer vorgesehen werden. Somit kann belastungsgerecht und materialsparend ein optimaler Verschleißschutz der Pfluganlage erreicht werden. Denkbar ist beispielsweise auch, dass zumindest bereichsweise entlang der Längserstreckung Verschleißschutzelemente einen geringen Abstand voneinander aufweisen, insbesondere aneinander mittelbar oder unmittelbar anliegen. Auf diese Weise kann beispielsweise auch die Unterseite zumindest bereichsweise großflächig oder vollständig von Verschleißschutzelementen abgedeckt sein.

Eine Variante der Erfindung kann dadurch gekennzeichnet sein, dass die Verschleißschutzelemente in mindestens einer in Richtung der Längserstreckung verlaufenden Reihe angeordnet sind, wobei die mindestens eine Reihe der Verschleißschutzelemente mittig oder außermittig zwischen Ableitseite und Rückseite angeordnet ist.

Wenn die Reihe der Schutzelemente mittig angeordnet ist, ergibt sich eine Pfluganlage, deren Ableit- und Rückseite gleichermaßen verschleißgeschützt sind. Dementsprechend kann eine derartige Anlage bei Erreichen eines gewissen Verschleißes umgedreht (auf Umschlag) eingesetzt werden, um die Standzeit zu verlängern. Auch ist es denkbar, dass diese an unterschiedlichen Seiten eines Pflugs angebracht werden kann. Eine außermittige Anordnung erlaubt eine Optimierung der verbleibenden Materialstärke des Anlagenkörpers im Bereich der Verschleißschutzelement-Aufnahmen, beispielsweise zur Ableitseite hin. So ist es beispielsweise denkbar, dass die Reihe derart außermittig angeordnet ist, dass sie näher an der Ableitseite als an der Rückseite der Pfluganlage liegt.

Gemäß einer vorteilhaften Weiterbildung der Erfindung wird vorgeschlagen, dass die Verschleißschutzelemente in mehreren Reihen angeordnet sind, dass zwischen den Reihen ein Reihenabstand vorgesehen ist, und dass die Abstände der Verschleißschutzelemente in den Reihen voneinander abweichen oder gleich sind.

Eine mehrreihige Anordnung von Verschleißschutzelementen kann einen verbesserten Schutz der Unterseite bieten. Hierbei kann der Reihenabstand zwischen den Reihen nach den jeweiligen Anforderungen gestaltet werden. So ist es denkbar, dass nur ein geringer Reihenabstand vorgesehen ist und/oder dass die Verschleißschutzelemente einer Reihe an denen einer anderen Reihe mittelbar anliegen. Auch kann die Anordnung der Verschleißschutzelemente sich von Reihe zu Reihe unterscheiden. Hierbei ist es insbesondere denkbar, dass die Abstände der Verschleißschutzelemente in einer Reihe, die näher an der Vorderseite der Pfluganlage liegt, geringer ausgelegt sind als diejenigen in einer Reihe, die weiter von der Vorderseite entfernt liegt. Somit lassen sich besonders verschleißgefährdete Bereiche besonders gut vor Verschleiß schützen, ohne dass ein unnötiger Aufwand an teurem Hartmaterial in Kauf genommen werden muss.

Bevorzugt kann auch vorgesehen sein, dass die Verschleißschutzelemente einer Reihe symmetrisch oder versetzt zu denen zumindest einer anderen Reihe angeordnet sind. Es sind somit spezifisch auf die jeweiligen Anforderungen angepasste Gestaltungen der Pfluganlage hinsichtlich der Anordnung der Verschleißschutzelemente möglich.

Erfindungsgemäß kann es vorgesehen sein, dass die Verschleißschutzelement-Aufnahmen senkrecht zu der Unterseite oder in einem Winkel zu der Flächennormalen der Unterseite ausgerichtet sind. Eine senkrechte Ausrichtung der Verschleißschutzelement-Aufnahme erlaubt dabei eine besonders einfache und kostengünstige Fertigung. Wenn die Verschleißschutzelement-Aufnahmen in einem Winkel zu der Unterseite ausgerichtet sind, kann die Ausrichtung belastungsgerecht vorgesehen werden. Beispielsweise können die Verschleißschutzelement-Aufnahmen derartig ausgerichtet sein, dass die Mittellängsachse von Verschleißschutzelementen zumindest teilweise in die Bearbeitungsrichtung ausgerichtet ist. Auf diese Weise kann die Gefahr eines Bruchs oder eines Verlusts der Verschleißschutzelemente weiter reduziert werden.

Ferner ist es denkbar, dass zumindest eine Verschleißschutzelement-Aufnahme senkrecht zu der Unterseite und zumindest eine Verschleißschutzelement-Aufnahme in einem Winkel zur Flächennormalen der Unterseite ausgerichtet ist. Beispielsweise können in Bereichen, die einer großen Verschleißlast an der Unterseite unterliegen, in einem Winkel ausgerichtete Verschleißschutzelement-Aufnahmen vorgesehen sein. In weniger belasteten Bereichen können beispielsweise senkrecht ausgerichtete Verschleißschutzelement-Aufnahmen vorgesehen sein. Auch ist es denkbar, jeweils zumindest bereichsweise unterschiedliche Winkel vorzusehen, in denen die Verschleißschutzelement-Aufnahmen ausgerichtet sind.

Gemäß einer bevorzugten Ausführungsform der Erfindung wird vorgeschlagen, dass die Verschleißschutzelemente ein einseitiges Schaftende und eine gegenüberliegenden Kopffläche aufweisen, vorzugsweise, dass die Kopffläche zumindest eines Verschleißschutzelements eben ausgebildet ist oder eine Wölbung, vorzugsweise eine konvexe Wölbung aufweist, und/oder dass das Schaftende zumindest eines Verschleißschutzelements eine Einführfase aufweist. Wenn die Kopffläche zumindest eines Verschleißschutzelements eben ausgebildet ist, lässt sich ein mit der Unterseite bündiger Abschluss erreichen. Hierdurch kann der Widerstand in Richtung der Bearbeitungsrichtung an der Unterseite reduziert werden. Eine konvex gewölbte Kopffläche kann die Bruchgefahr an der Kopffläche reduzieren. Eine Einführfase kann das Einsetzen es Verschleißschutzelements in die Verschleißschutzelement-Aufnahme erleichtern.

Eine mögliche Erfindungsausgestaltung ist derart, dass in zumindest einer Verschleißschutzelement-Aufnahme zumindest zwei Verschleißschutzelemente aufgenommen und in Richtung der Mittellängsachsen der Verschleißschutzelemente aneinandergereiht sind. Gegenüber der Verwendung eines größeren, beispielsweise längeren, Verschleißschutzelements bietet die Verwendung von zumindest zwei Verschleißschutzelementen den Vorteil, dass diese kürzer ausgeführt sein können. Sie sind somit einfacher und kostengünstiger zu fertigen. Vorzugsweise steht hierbei die Kopffläche eines Verschleißschutzelements mittelbar oder unmittelbar mit dem Schaftende eines anderen Verschleißschutzelements in Kontakt. Darüber hinaus kann das Einsetzen der Verschleißschutzelemente in die Verschleißschutzelement-Aufnahme erleichtert werden, da die Gefahr eines Verkantens reduziert wird. Darüber hinaus lassen sich Vorteile in der Vermeidung von Brüchen erzielen.

Zunächst ergeben sich innerhalb kürzerer Verschleißschutzelemente naturgemäß geringere Biegespannungen. Zudem können sich gegebenenfalls auftretende Brüche zwischen den zumindest zwei Verschleißschutzelementen nicht fortsetzen.

Gemäß einer vorteilhaften Weiterbildung der Erfindung wird vorgeschlagen, dass zumindest eines der Verschleißschutzelemente im Bereich der Kopffläche einen Kopf aufweist, der sich an den Schaft mittelbar oder unmittelbar anschließt, wobei der Kopf vorzugsweise einen größeren Außenumfang aufweist als der Schaft. Beispielsweise lässt sich auf diese Weise eine größere Fläche der Unterseite abdecken, wobei materialsparend nicht das gesamte Verschleißschutzelement vergrößert werden muss. So kann beispielsweise der Schaft des Verschleißschutzelements kleiner dimensioniert werden. In diesem Fall kann dementsprechend auch die Schaftaufnahme der Verschleißschutzelement-Aufnahmen kleiner dimensioniert werden, sodass mehr des vergleichsweise zähen Materials des Anlagenkörpers verbleibt. Dies kann sich günstig auf die Beständigkeit der Anlage gegen Stoßbelastungen auswirken. Denkbar ist es auch, dass der Kopf dazu ausgelegt ist, auf die Ableitseite einwirkende Seitenkräfte aufzunehmen. Insbesondere kann ein Durchmesser und/oder eine Erstreckung des Kopfes quer zu der Mittellängsachse des Verschleißschutzelements größer als, gleich groß wie oder nur geringfügig geringer sein als die Materialstärke des Anlagenkörpers, sodass eine Seitenfläche des Kopfes mit der Ableitseite und/oder der Rückseite der Pfluganlage bündig abschließt oder über diese hinausragt.

Weiterhin ist es denkbar, dass zumindest eine Verschleißschutzelement-Aufnahme eine Kopfaufnahme aufweist, die zumindest bereichsweise korrespondierend zu dem Kopf ausgebildet ist, wobei der Kopf zumindest teilweise in der Kopfaufnahme aufgenommen ist. Eine Kopfaufnahme kann dabei beispielsweise als Senkung ausgeführt sein. Durch die Kopfaufnahme kann eine definierte Anlage für den Kopf erzielt werden. Vorstellbar ist eine Anordnung von Verschleißschutzelement-Aufnahmen, bei der nicht alle Verschleißschutzelement-Aufnahmen eine Kopfaufnahme aufweisen, sodass teilweise Verschleißschutzelemente mit ihren Köpfen über die Unterseite hinausragen.

Wenn vorgesehen ist, dass zumindest eines der Verschleißschutzelemente einen Übergangsabschnitt zwischen dem Schaft und dem Kopf aufweist, der vorzugsweise mit kegeliger Außenkontur oder mit konvex oder konkav gewölbter Außenkontur, insbesondere als Verrundung ausgebildet ist, ergibt sich eine spannungsoptimierte Gestaltung des Verschleißschutzelements.

Hierbei kann es insbesondere vorgesehen sein, dass zumindest eine Verschleißschutzelement-Aufnahme einen Übergangsbereich aufweist, der korrespondierend zu dem Übergangsabschnitt ausgebildet ist, wobei der Übergangsabschnitt zumindest teilweise in dem Übergangsbereich aufgenommen ist. Entsprechend der Gestaltung des Übergangsbereichs des Verschleißschutzelements kann der Übergangsabschnitt beispielsweise als Verrundung oder als Fase ausgestaltet sein.

Gemäß einer bevorzugten Ausführungsform der Erfindung wird vorgeschlagen, dass der Kopf zumindest eines Verschleißschutzelements eine Kopf-Mittellängsachse aufweist, die zu einer Schaft-Mittellängsachse des Schafts beabstandet ist. Die Kopf-Mittellängsachse kann dabei insbesondere parallel zu der Schaft-Mittellängsachse ausgerichtet sein. Es ist jedoch auch denkbar, dass die Kopf-Mittellängsachse in einem Winkel zu der Schaft-Mittellängsachse ausgerichtet ist. Es ergibt sich somit eine Gestalt eines Verschleißschutzelements, bei der Kopf und Schaft exzentrisch zueinander vorliegen. Dies erlaubt eine zusätzliche Freiheit in der Positionierung des Kopfes bezüglich der Ableit- und/oder der Rückseite der Pfluganlage.

Erfindungsgemäß kann es auch vorgesehen sein, dass der Kopf eine Kopf-Seitenfläche aufweist, die elliptisch oder rotationssymmetrisch, insbesondere als zylindrische oder kegelige Fläche ausgebildet ist, oder dass der Kopf mehrere Kopf-Seitenflächen aufweist, insbesondere dass der Kopf einen polygonalen, besonders bevorzugt einen rechteckigen Querschnitt aufweist. Hierbei kann sich bei elliptischen und rotationssymmetrischen Gestaltungen eine hohe Widerstandsfähigkeit gegenüber Ausbrüchen. Polygonale Querschnitte erlauben es beispielsweise, dass die Köpfe von Verschleißschutzelementen an ihren Kopf-Seitenflächen mittelbar oder unmittelbar aneinander anschließen. Somit kann die Unterseite zumindest bereichsweise vollständig oder teilweise abgedeckt werden. Auch ist es denkbar, dass die Kopf-Seitenflächen mit der Ableitseite und/oder der Rückseite der Pfluganlage abschließen. Heraus kann sich ein erhöhter Schutz der Ableit- und/oder der Rückseite ergeben.

Die Erfindung wird im Folgenden anhand von in den Zeichnungen dargestellten Ausführungsbeispielen näher erläutert. Es zeigen:
- Figur 1: eine Ansicht einer Pfluganlage von unten,
- Figur 2: eine Ansicht eines Schnitts durch eine Pfluganlage entlang der Linie II-II in Figur 1,
- Figur 3: perspektivische Ansichten verschiedener Ausführungsbeispiele von Verschleißschutzelementen,
- Figur 4: verschiedene Ausführungsbeispiele anhand eines Bereichs IV aus Figur 2,
- Figur 5: eine weitere Ansicht einer Pfluganlage von unten,
- Figur 6: eine Seitenansicht einer Pfluganlage,
- Figur 7: eine weitere Ansicht einer Pfluganlage von unten,
- Figur 8: eine Seitenansicht einer Pfluganlage mit einem Absatz,
- Figur 9: eine Ansicht eines Schnitts durch eine Pfluganlage entlang einer Linie IX-IX aus Figur 6,
- Figur 10: eine Ansicht eines Schnitts durch eine Pfluganlage entlang einer Linie X-X aus Figur 8 und
- Figur 11: verschiedene Ausführungsbeispiele anhand eines Bereichs XI aus Figur 2.

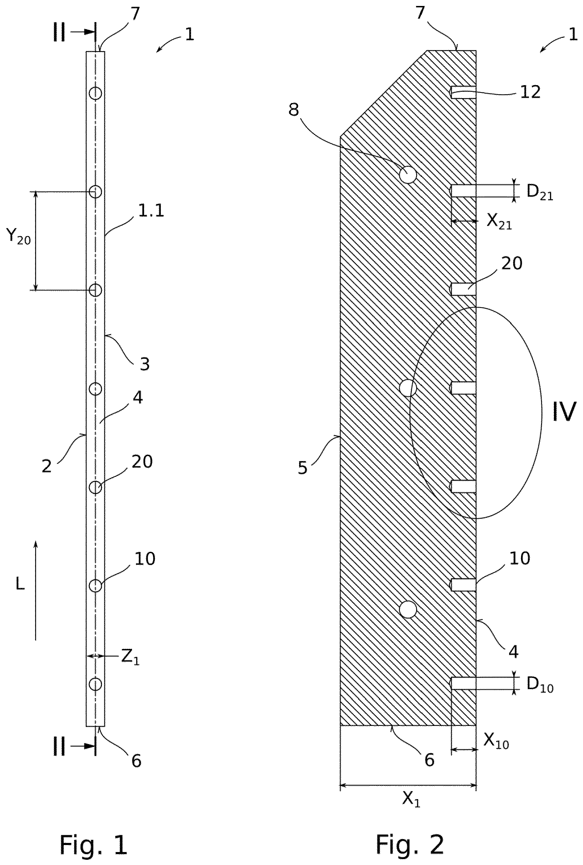

Figur 1 zeigt eine Pfluganlage 1 in einer Ansicht von unten. Wie der Abbildung zu entnehmen ist, kann die Pfluganlage 1 einen Anlagenkörper 1.1 aufweisen, der plattenförmig ausgestaltet ist und eine Ableitseite 2, eine Rückseite 3, eine Stirnseite 6 und eine Rückfläche 7 aufweist. Die Pfluganlage 1 kann eine Materialstärke Z_1 aufweisen. Wie der Abbildung weiter zu entnehmen ist, können Verschleißschutzelement-Aufnahmen 10 und Verschleißschutzelemente 20 in einer Reihe entlang einer Längserstreckung L des Anlagenkörpers 1.1 angeordnet sein. Die Längserstreckung L verläuft parallel zu der Unterseite 4 und der Ableitseite 2 und kann sich von der Stirnseite 6 in Richtung der Rückfläche 7 erstrecken.

Wie die Figur 1 weiter zeigt, sind in die Unterseite 4 der Pfluganlage 1 die Verschleißschutzelement-Aufnahmen 10 eingebracht. Die Verschleißschutzelement-Aufnahmen 10 können als Bohrungen ausgeführt sein. In den Verschleißschutzelement-Aufnahmen 10 sind Verschleißschutzelemente 20, vorzugsweise aus Hartmaterial eingebracht. Die Verschleißschutzelemente 20 können in einem Abstand Y_20 zueinander angeordnet sein, der zwischen Schaft-Mittellängsachsen ML_21 der Verschleißschutzelemente 20 bemessen ist. Die Verschleißschutzelemente können dabei gleichartig oder verschiedenartig gestaltet sein.

Vorzugsweise kann der Abstand Y_20 zwischen Mittellängsachsen ML_21 zweier Verschleißschutzelemente 20 einen Wert zwischen mindestens der Summe des Radius eines ersten Verschleißschutzelements 20 und des Radius eines zweiten Verschleißschutzelements 20 zuzüglich 0,5 mm und maximal zwei Dritteln der Gesamtlänge der Pfluganlage betragen. Ein Radius eines Verschleißschutzelements 20 kann dabei einem halben Schaftdurchmesser D_21 oder einem halben Durchmesser eines Kopfs 24 eines Verschleißschutzelements 20 entsprechen.

Besonders bevorzugt kann der Abstand Y_20 einen Wert zwischen mindestens der Summe des Radius des ersten Verschleißschutzelements 20 und des Eineinhalbfachen des Radius des zweiten Verschleißschutzelements 20 und maximal dem Fünfzigfachen des kleineren oder größeren der beiden Radien, vorzugsweise zwischen dem Sechsfachen und dem Dreißigfachen des kleineren oder größeren der beiden Radien betragen.

Figur 2 zeigt eine Ansicht eines Schnitts durch die Pfluganlage 1 entlang der Linie II-II in Figur 1. Zu erkennen ist, dass die Pfluganlage 1 gegenüber der Unterseite 4, beabstandet um eine Anlagenhöhe X_1, eine Oberseite 5 aufweisen kann. Die Anlagenhöhe X_1 kann beispielsweise zwischen 25 mm und 400 mm betragen, bevorzugt zwischen 80 mm und 300 mm, insbesondere zwischen 100 mm und 200 mm.

Der Figur 2 ist ferner zu entnehmen, dass in dem Anlagenkörper 1.1 Befestigungsaufnahmen 8 vorgesehen sein können. Diese können beispielsweise Schrauben zur Befestigung der Pfluganlage 1 an einem Pflug aufnehmen.

In Figur 2 ist deutlicher zu erkennen, dass die Verschleißschutzelemente 20 in den Verschleißschutzelement-Aufnahmen 10 aufgenommen sind. Hierbei kann es vorgesehen sein, dass die Verschleißschutzelement-Aufnahmen 10 einen Boden 12 und eine Aufnahmetiefe X_10 aufweisen. Vorliegend sind die Verschleißschutzelemente 20 mit ihrer gesamten Schaftlänge X_21 in den Verschleißschutzelement-Aufnahmen 10 aufgenommen. Es ist jedoch auch vorstellbar, dass die Verschleißschutzelemente 20 nicht mit ihrer gesamten Schaftlänge X_21 aufgenommen sind. Ferner ist es vorstellbar, dass nur einige der Verschleißschutzelement 20 mit ihrer gesamten Schaftlänge X_21 aufgenommen sind.

Hierzu können beispielsweise Verschleißschutzelemente 20 mit unterschiedlichen Schaftlängen X_21 und/oder Verschleißschutzelement-Aufnahmen 10 mit unterschiedlichen Aufnahmetiefen X_10 vorgesehen sein. Vorzugsweise kann die Aufnahmetiefe X_10 mindestens 2 mm geringer sein als die Anlagenhöhe X_1. Besonders bevorzugt kann die Aufnahmetiefe X_10 mindestens 3 mm bis maximal 60% der Anlagenhöhe X_1 betragen. Insbesondere kann eine Aufnahmetiefe X_10 von mindestens 10 mm bis maximal 45 mm vorgesehen sein.

Weiter ist der Figur 2 zu entnehmen, dass die Verschleißschutzelemente 20 einen Schaftdurchmesser D_21 aufweisen. Die Verschleißschutzelement-Aufnahme 10 können einen korrespondierenden Aufnahmedurchmesser D_10 aufweisen. Das Verhältnis von Aufnahmedurchmesser D_10 zu Schaftdurchmesser D_21 kann entsprechend dem gewünschten Passungsverhältnis gewählt werden. Vorzugsweise wird ausreichend Spiel vorgesehen, dass die Verschleißschutzelemente 20 mit geringem Kraftaufwand in die Verschleißschutzelement-Aufnahmen 10 eingesetzt werden können.

Der Schaftdurchmesser D_21 kann beispielsweise derart gewählt werden, dass ein Durchbruch durch die Ableitseite 2 und/oder die Rückseite 3 verhindert ist. Insbesondere kann der D_21 so gewählt sein, dass er um mindestens 1 mm, vorzugsweise mindestens 2 mm geringer ist als die Materialstärke Z_1. Bevorzugt kann der Schaftdurchmesser D_21 mindestens 4 mm betragen und die Materialstärke mindestens 5 mm, vorzugsweise mindestens 6 mm. Weiter bevorzugt kann der Schaftdurchmesser D_21 mindestens 6 mm betragen und die Materialstärke mindestens 7 mm, vorzugsweise mindestens 8 mm. Weiter bevorzugt kann der Schaftdurchmesser D_21 mindestens 7,5 mm bis maximal 12 mm betragen. Ein Verhältnis der Materialstärke Z_1 der Pfluganlage 1 zu dem Schaftdurchmesser D_21 kann bevorzugt im Bereich zwischen 1,1 und 1,6, besonders bevorzugt zwischen 1,3 und 1,5 betragen.

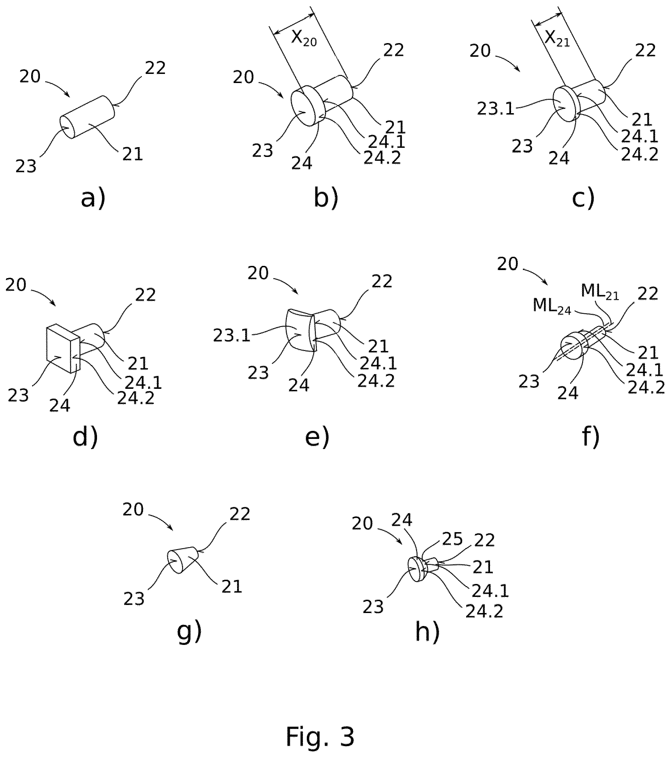

In Figur 3 sind perspektivische Ansichten verschiedener Ausführungsbeispiele von Verschleißschutzelementen 20 dargestellt.

Wie Figur 3a zeigt, kann ein Verschleißschutzelement 20 zylindrisch ausgestaltet sein. Es kann einen Schaft 21, ein Schaftende 22 und eine gegenüberliegende Kopffläche 23 aufweisen. In dem gezeigten Ausführungsbeispiel entspricht die Schaftlänge X_21 im Wesentlichen der Elementlänge X_20.

Wie der Figur 3b zu entnehmen ist, kann ein Verschleißschutzelement 20 im Bereich der Kopffläche 23 einen Kopf 24 aufweisen. Der Kopf 24 kann dabei einen größeren Außenumfang aufweisen als der Schaft 21. Bei einem derartigen Verschleißschutzelement 20 kann sich eine Schaftlänge X_21 ergeben, die kleiner ist als die Elementlänge X_20. Wie in der Abbildung dargestellt, kann der Kopf 24 eine zylindrische Kopf-Seitenfläche 24.2 aufweisen. Der Kopffläche 23 abgewandt kann der Kopf 24 eine Kopfunterseite 24.1 aufweisen, die beispielsweise eben und/oder parallel zu der Kopffläche 23 ausgestaltet sein kann. Es sind jedoch auch andere Gestaltungen der Kopfunterseite 24.1, insbesondere als gewölbte Kopfunterseite 24.1 denkbar.

Aus der Figur 3c geht hervor, dass die Kopffläche 23 eine Wölbung 23.1 aufweisen kann. Die Wölbung 23.1 kann, wie dargestellt, eine konvexe Wölbung sein. Es ist jedoch auch denkbar, eine andersartige Wölbung 23.1, insbesondere eine konkave Wölbung 23.1 vorzusehen. Es ist hervorzuheben, dass nicht nur Verschleißschutzelemente 20 mit einem Kopf 24 eine Wölbung 23.1 an der Kopffläche 23 aufweisen können. Vielmehr ist eine Wölbung 23.1 auch an einer Kopffläche 23 eines Verschleißschutzelements 20 ohne Kopf 24, beispielsweise gemäß den Ausführungsbeispielen der Figuren 1 oder 3a, denkbar.

Figuren 3d und 3e zeigen weitere Ausführungsbeispiele eines Verschleißschutzelements 20. Diesen Beispielen entsprechend kann der Kopf 24 mehrere Kopf-Seitenflächen 24.2 aufweisen. Insbesondere kann der Kopf 24 einen polygonalen, insbesondere rechteckigen Querschnitt haben. In diesem Fall können sich ebene Kopf-Seitenflächen 24.2 ergeben. Es sind jedoch auch unebene, insbesondere gewölbte Kopf-Seitenflächen 24.2 denkbar. Wie der Figur 3e zu entnehmen ist, kann die Kopffläche 23 eine Wölbung 23.1 aufweisen. Auch bei dieser Wölbung 23.1 kann es sich beispielsweise um eine konvexe oder konkave Wölbung 23.1 handeln.

Die Figur 3f zeigt ein weiteres Ausführungsbeispiel eines Verschleißschutzelements 20 mit einem Kopf 24. Wie der Abbildung zu entnehmen ist, kann der Kopf 24 eine Kopf-Mittellängsachse ML_24 aufweisen, die zu einer Schaft-Mittellängsachse ML_21 beabstandet angeordnet ist. Der Kopf 24 kann somit exzentrisch zu dem Schaft 21 ausgebildet sein.

Ein Verschleißschutzelement 20 kann auch einen konischen Schaft 21 aufweisen, wie dies aus der Figur 3g hervorgeht.

Wie die Figur 3h zeigt, kann ein Verschleißschutzelement 20 einen Übergangsabschnitt 25 zwischen dem Schaft 21 und dem Kopf 24 aufweisen. Vorliegend ist der Übergangsabschnitt 25 als Kegelkontur ausgestaltet. Es sind jedoch auch andere Formen von Übergangsabschnitten 25 denkbar, beispielsweise mit konvex oder konkav gewölbter Außenkontur, insbesondere als Verrundung.

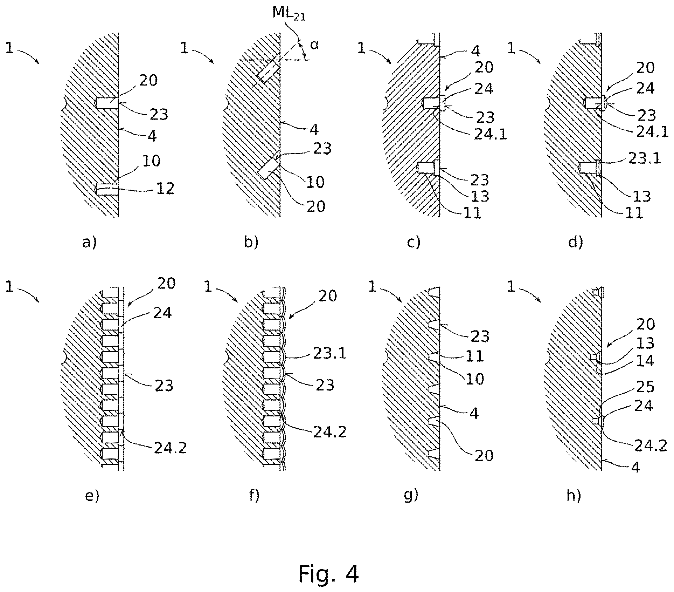

Figur 4 zeigt verschiedene Ausführungsbeispiele für die Anordnung von Verschleißschutzelementen 20 und Verschleißschutzelement-Aufnahmen 10 an der Pfluganlage 1 anhand des Details IV aus Figur 2.

Wie aus den Figuren 4a und 4c bis 4h hervorgeht, können die Verschleißschutzelement-Aufnahmen 10 senkrecht zu der Unterseite 4 der Pfluganlage 1 ausgerichtet sein. Denkbar ist es jedoch auch, dass die Verschleißschutzelement-Aufnahmen 10 in einem Winkel α zu der Flächennormalen der Unterseite 4 ausgerichtet sind, wie dies die Figur 4b zeigt. Selbstverständlich müssen bei einer erfindungsgemäßen Pfluganlage 1 nicht alle Verschleißschutzelement-Aufnahme 10 die gleiche Ausrichtung haben. Es ist vielmehr auch vorstellbar, dass zumindest eine oder mehrere Verschleißschutzelement-Aufnahmen 10 in einem Winkel α zu der Flächennormalen der Unterseite 4 und/oder zumindest eine oder mehrere Verschleißschutzelement-Aufnahmen 10 senkrecht zu der Unterseite 4 ausgerichtet sind. Der Winkel α kann beispielsweise zwischen 0° und 90° betragen, vorzugsweise zwischen 5° und 85°, besonders bevorzugt zwischen 15° und 45°.

Auch ist es denkbar, dass Verschleißschutzelement-Aufnahmen 10 in unterschiedlichen Winkeln α vorgesehen sind.

Wie in der Figur 4b dargestellt, können die Verschleißschutzelemente 20 eine Kopffläche 23 aufweisen, die senkrecht zu der Schaft-Mittellängsachse ML_21 ausgerichtet ist. In diesem Fall kann die Kopffläche 23 nicht bündig mit der Unterseite 4 abschließen, wenn ein Winkel α der Verschleißschutzelement-Aufnahme 10 vorgesehen ist, wie dies in der Figur 4b zu sehen ist. Es ist jedoch auch denkbar, die Kopffläche 23 in einem Winkel zu der Schaft-Mittellängsachse ML_21 vorzusehen, sodass beispielsweise auch bei einer Anordnung der Verschleißschutzelement-Aufnahme 10 in einem Winkel α bezüglich der Flächennormalen der Unterseite 4 ein bündiger Abschluss erzielt werden kann.

Die Verschleißschutzelement-Aufnahmen 10 können ferner Kopfaufnahmen 13 aufweisen, wie in den Figuren 4c und 4d zu sehen ist. Die Kopfaufnahmen 13 können insbesondere korrespondierend zu den Köpfen 24 ausgestaltet sein. In den gezeigten Ausführungsbeispielen ist nur ein Teil der Verschleißschutzelement-Aufnahmen 10 mit einer Kopfaufnahme 13 versehen. Es ist jedoch auch denkbar, dass alle Verschleißschutzelement-Aufnahmen 10 mit einer Kopfaufnahme 13 versehen sind. Ferner ist zu erkennen, dass in dem gezeigten Ausführungsbeispiel die Köpfe 24 vollständig in den Kopfaufnahmen 13 aufgenommen sind. Dies ist jedoch nicht zwingend erforderlich. Beispielsweise könnten die Kopfaufnahmen 13 auch so gestaltet sein, dass sie nur einen Teilbereich der Köpfe 24 aufnehmen, wobei ein verbleibender Teilbereich der Köpfe 24 beispielsweise über die Unterseite 4 hinausragt.

Die Figuren 4e und 4f zeigen, dass der Abstand zwischen benachbarten Verschleißschutzelement 20 auch gering ausgestaltet sein kann, insbesondere so, dass die Köpfe 24 mit ihren Kopf-Seitenflächen 24.2 unmittelbar aneinander anliegen. Die Köpfe 24 können jedoch auch mittelbar aneinander anliegen, beispielsweise wenn ein Stoffschlussmittel, etwa ein Klebstoff oder Lotmaterial zwischen ihnen eingebracht ist. Es kann bei gering beabstandeten Verschleißschutzelementen 20 vorgesehen sein, dass die Verschleißschutzelement-Aufnahmen 10 keine Kopfaufnahmen 13 aufweisen. Denkbar ist jedoch auch, dass die Verschleißschutzelement-Aufnahmen 10 Kopfaufnahmen 13 aufweisen, die jedoch in Richtung der Längserstreckung L ineinander übergehen. In Richtung der Ableitseite 2 und/oder der Rückseite 3 kann dennoch verbleibendes Material des Anlagenkörpers 1.1 als Berandung derartiger Kopfaufnahmen 13 vorgesehen sein.

Selbstverständlich können auch Verschleißschutzelemente 20 ohne Köpfe 24 mit einem geringen Abstand zueinander angeordnet sein, insbesondere derart, dass die Verschleißschutzelemente 20 mittelbar oder unmittelbar aneinander anliegen.

Die Figur 4g zeigt ein Beispiel für eine Anordnung von Verschleißschutzelementen 20 mit einem konisch ausgestalteten Schaft 21 in Verschleißschutzelement-Aufnahmen 10 mit einer korrespondierend ausgestalteten Schaftaufnahme 11. Figur 4h beinhaltet eine Darstellung einer Anordnung von Verschleißschutzelementen 20, die einen Übergangsabschnitt 25 aufweisen, wobei die Verschleißschutzelement-Aufnahmen 10 dazu korrespondierend ausgebildete Übergangsbereiche 14 aufweisen. Wie der Figur 4h weiter zu entnehmen ist, können die Verschleißschutzelement-Aufnahmen 10 darüber hinaus auch Kopfaufnahmen 13 aufweisen. Es können jedoch auch Verschleißschutzelement-Aufnahmen 10 ohne Kopfaufnahmen 13 vorgesehen sein, sodass zwar die Übergangsabschnitte 25 in Übergangsbereichen 14 aufgenommen sind, die Köpfe jedoch, beispielsweise mit ihren Kopf-Seitenflächen 24.2, zumindest teilweise über die Unterseite 4 hervorragen.

Die in den Figuren 4a bis 4f gezeigten Ausführungsbeispiele von Ausgestaltungen und Anordnungen sowie Ausrichtungen von Verschleißschutzelement-Aufnahmen 10 und Verschleißschutzelementen 20 einer Pfluganlage 1 können natürlich auch miteinander kombiniert werden, bevorzugt abwechselnd oder in unterschiedlichen Bereichen angeordnet, insbesondere entlang der Längserstreckung L in unterschiedlichen Gestaltungen angeordnet sein.

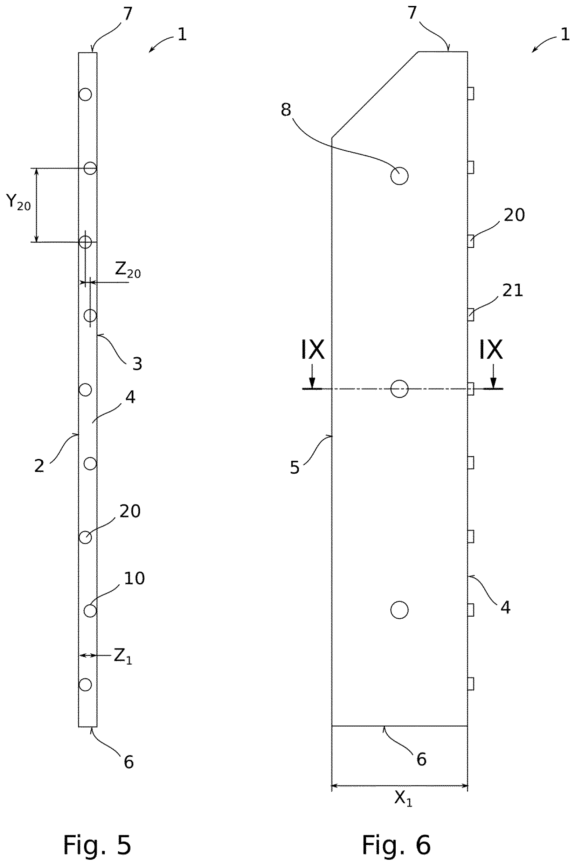

Figur 5 zeigt ein Ausführungsbeispiel einer Pfluganlage 1 in einer Ansicht von unten. Wie der Abbildung zu entnehmen ist, können die Verschleißschutzelement-Aufnahmen 10 und die Verschleißschutzelemente 20 in zwei Reihen entlang einer Längserstreckung L der Pfluganlage 1 angeordnet sein. Selbstverständlich sind auch mehr als zwei Reihen denkbar. Hierbei können Verschleißschutzelemente 20 einer Reihe gleichartig gestaltet sein wie Verschleißschutzelemente 20 einer weiteren Reihe. Beispielsweise können Verschleißschutzelemente 20 einer Reihe gleiche Durchmesser haben wie Verschleißschutzelemente 20 einer weiteren Reihe. Ein Durchmesser eines Verschleißschutzelements 20 kann dabei einem Schaftdurchmesser X_21 oder einem Durchmesser eines Kopfes 24 des Verschleißschutzelements 20 entsprechen. Es ist aber auch denkbar, dass die Durchmesser zwischen den Reihen oder innerhalb einer Reihe voneinander abweichen.

Zwischen den Reihen kann ein Reihenabstand Z_20 vorgesehen sein. Wenn bei einer Anordnung in mindestens zwei Reihen die Summe eines Durchmessers eines Verschleißschutzelements einer Reihe und eines Verschleißschutzelements einer weiteren Reihe größer oder gleich der Anlagendicke Z_1 ist, kann der Reihenabstand Z_20 mindestens ein Viertel des kleineren Durchmessers betragen. Sind die Durchmesser gleich, kann der Reihenabstand Z_20 mindestens ein Viertel des Durchmessers betragen. Vorzugsweise kann der Reihenabstand Z_20 maximal den Wert der Materialstärke Z_1 abzüglich 1 mm abzüglich des arithmetischen Mittels des größeren und des kleineren Durchmessers betragen. Besonders bevorzugt beträgt der Reihenabstand Z_20 mindestens 0,1 mm. Weiter bevorzugt beträgt der Reihenabstand Z_20 zwischen 0,5 mm und 30 mm, besonders bevorzugt zwischen 0,5 mm und 3 mm.

Wie in der Figur 5 dargestellt, können die Abstände Y_20 zwischen den Verschleißschutzelementen 20 beider Reihen konstant und gleich zueinander sein. In diesem Fall ergibt sich eine Anordnung in zwei Reihen, die versetzt zueinander angeordnet sind. Es ist jedoch auch denkbar, dass innerhalb der Reihen die Verschleißschutzelemente 20 zueinander veränderliche Abstände Y_20 aufweisen. Beispielsweise ist es denkbar, dass in besonders verschleißgefährdeten Bereichen die Abstände Y_20 geringer gewählt werden. Auch müssen die Abstände Y_20 innerhalb einer Reihe nicht gleich denen innerhalb einer anderen Reihe sein.

Insbesondere kann es sinnvoll sein, in einer Reihe, die näher an der Ableitseite 2 liegt als eine andere Reihe, geringere Abstände Y_20 vorzusehen.

Wenn bei einer Anordnung in mindestens zwei Reihen die Summe eines Durchmessers eines Verschleißschutzelements 20 einer Reihe und eines Verschleißschutzelements 20 einer weiteren Reihe größer oder gleich der Anlagendicke Z_1 ist, kann der Abstand Y_20 mindestens ein Viertel des kleineren Durchmessers betragen. Sind die Durchmesser gleich, kann der Abstand Y_20 mindestens ein Viertel des Durchmessers betragen. Vorzugsweise kann der Abstand Y_20 maximal den Wert der Länge der Pfluganlage abzüglich 1 mm abzüglich des arithmetischen Mittels des größeren und des kleineren Durchmessers betragen.

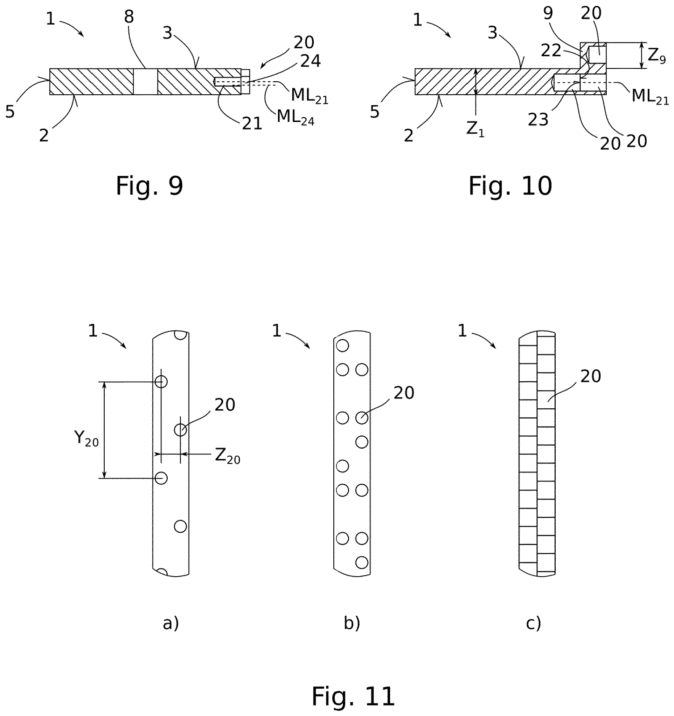

Es ist auch denkbar, dass nicht die Verschleißschutzelement-Aufnahmen 10 und die Verschleißschutzelemente 20 in mehreren Reihen angeordnet sind, sondern dass sich ein Versatz zwischen den Köpfen 24 daraus ergibt, dass die Köpfe 24 exzentrisch zu den Schäften 21 der Verschleißschutzelement 20 gestaltet sind, wie dies beispielsweise in der Figur 3f zu sehen ist. In diesem Fall kann eine versetzte Anordnung der Köpfe 24 auch dann erreicht werden, wenn die Verschleißschutzelement-Aufnahmen 10 in einer Reihe angeordnet sind und die Verschleißschutzelemente 20 unterschiedlich weit um ihre Schaft-Mittellängsachse ML_21 rotiert in die Verschleißschutzelement-Aufnahme 10 eingesetzt werden. Eine Unteransicht einer derart ausgestalteten Pfluganlage 1 kann ebenfalls der Figur 5 entsprechen. Eine Seitenansicht eines derartigen Ausführungsbeispiels zeigt die Figur 6. Besonders deutlich geht die Ausrichtung eines Verschleißschutzelements 20 mit einem exzentrisch zu dem Schaft 21 angeordneten Kopf 24 aus der Schnittansicht der Figur 9 hervor.

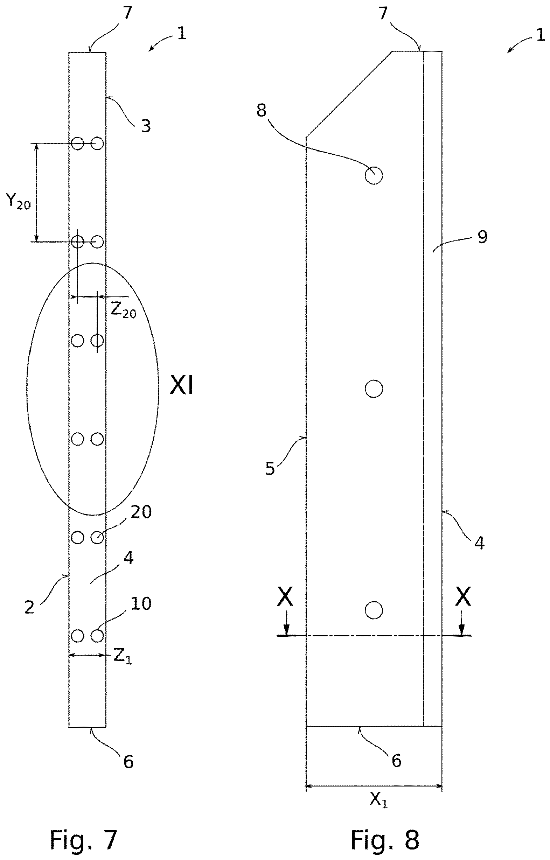

In Figur 7 ist ein Beispiel einer Pfluganlage 1 zu sehen, die zwei Reihen von Verschleißschutzelement-Aufnahmen 10 und Verschleißschutzelementen 20 aufweist, die symmetrisch zueinander angeordnet sind. Selbstverständlich müssen die Reihen nicht symmetrisch zueinander ausgebildet und/oder angeordnet sein, wie dies anhand von verschiedenen Beispielen des mit XI markierten Bereichs der Figur 7 in den Figuren 11a bis 11c dargestellt ist.

Hierbei ist in Figur 11a eine versetzte Anordnung der Verschleißschutzelemente 20 und/oder Verschleißschutzelement-Aufnahmen 10 ähnlich dem in der Figur 5 dargestellten Ausführungsbeispiel dargestellt, wobei jedoch ein vergleichsweise größerer Reihenabstand Z_20 vorgesehen ist. Figur 11b zeigt eine versetzte Anordnung, bei der die Abstand Y_20 in den Reihen jeweils nicht konstant gewählt sind. In Figur 11c ist eine versetzte Anordnung von Verschleißschutzelementen 20 mit Köpfen 24 mit rechteckigen Querschnitten dargestellt, wie sie beispielsweise den Ausführungsbeispielen der Figuren 3d und 3e entsprechen können.

Wie der Figur 8 zu entnehmen ist, kann an der Pfluganlage 1 im Bereich der Unterseite 4 ein Absatz 9 vorgesehen sein. Der Absatz 9 kann sich entlang der Längserstreckung L von der Stirnseite 6 bis zur Rückfläche 7 erstrecken. Es ist jedoch auch vorstellbar, dass der Absatz 9 nicht die gesamte Länge der Pfluganlage 1 aufweist und nur bereichsweise, insbesondere auch mehrteilig und/oder mit Unterbrechungen vorgesehen ist.

Figur 10 zeigt eine Schnittansicht entlang der Linie X-X aus Figur 8. Wie der Figur deutlich zu entnehmen ist, kann die Materialstärke Z_1 der Pfluganlage 1 im Bereich der Unterseite 4 mit einer Absatz-Materialstärke Z_9 ergänzt werden. Hierdurch ergibt sich eine Vergrößerung der Fläche der Unterseite 4. In dem von dem Absatz 9 gebildeten Bereich der Unterseite 4 können Verschleißschutzelemente 20 vorgesehen sein.

Wie der Figur 10 weiter zu entnehmen ist, können in einer Verschleißschutzelement-Aufnahme 10 zwei Verschleißschutzelemente 20 aufgenommen und beispielsweise in Richtung der Mittellängsachsen ML_21 der Verschleißschutzelemente 20 aneinandergereiht sein. Hierbei kann die Kopffläche 23 eines Verschleißschutzelements 20 mittelbar oder unmittelbar mit dem Schaftende 22 des anderen Verschleißschutzelements 20 in Kontakt stehen. Es können auch mehr als zwei Verschleißschutzelemente 20 in zumindest einer Verschleißschutzelement-Aufnahme 10 angeordnet sein.

Im Folgenden wird beispielhaft eine Möglichkeit zur Herstellung einer erfindungsgemäßen Pfluganlage 1 beschrieben.

Der Anlagenkörper 1.1 der Pfluganlage 1 kann beispielsweise aus einem Blech, insbesondere aus einem Stahlblech ausgeschnitten werden. Ein Absatz 9 kann ebenfalls aus einem Blechzuschnitt ausgeschnitten werden. Denkbar ist aber auch, beispielsweise ein Stabmaterial als Ausgangsmaterial für einen Absatz 9 zu verwenden. Ein Absatz 9 kann dann insbesondere stoffschlüssig, beispielsweise durch eine Schweiß- oder Klebeverbindung an den Anlagenkörper 1.1 angebracht werden. Es sind jedoch auch andere Verbindungen, wie beispielsweise Schraub- oder Nietverbindungen denkbar. Auch eine einteilige Ausbildung des Absatzes 9 mit dem Anlagenkörper 1.1 ist vorstellbar.

Die Verschleißschutzelement 20 können beispielsweise durch einen Sinterprozess hergestellt werden.

In den Anlagenkörper 1.1 können Befestigungsaufnahmen 8 zur Aufnahme von Befestigungsmitteln zur Anbringung an einem Pflug, beispielsweise Schrauben, eingebracht werden. Beispielsweise können Befestigungsaufnahme 8 in Form von Bohrungen in den Anlagenkörper 1.1 gebohrt werden.

In die Unterseite 4 der Pfluganlage 1 können Verschleißschutzelement-Aufnahmen 10 eingebracht werden. Vorzugsweise werden die Verschleißschutzelement-Aufnahmen 10 als Bohrungen ausgeführt und werden durch Bohren in die Unterseite 4 der Pfluganlage 1 eingebracht. Es ist jedoch auch denkbar, andere Verfahren, insbesondere andere spanende Verfahren, beispielsweise Fräsverfahren, zu verwenden, um die Verschleißschutzelement-Aufnahme 10 in die Unterseite 4 einzubringen.

In die Verschleißschutzelement-Aufnahmen 10 kann ein Stoffschlussmittel, beispielsweise ein Lot eingebracht werden. Alternativ ist auch beispielsweise ein Klebstoff denkbar. Im Anschluss können die Verschleißschutzelemente 20 in die Verschleißschutzelement-Aufnahmen 10 eingesetzt werden. Vorzugsweise wird die Pfluganlage 1 dabei so orientiert, dass die Verschleißschutzelemente 20 unter Schwerkraftwirkung in die Verschleißschutzelement-Aufnahmen 10 gedrückt werden. Ein Flussmittel kann beispielsweise vor oder nach dem Einsetzen der Verschleißschutzelemente 20 in die Verschleißschutzelement-Aufnahme 10 eingebracht werden. Die Pfluganlage 1 mit den in den Verschleißschutzelement-Aufnahmen 10 eingesetzten Verschleißschutzelement 20 kann dann einer Wärmebehandlung, beispielsweise in einem Ofen, unterzogen werden, um die stoffschlüssige, insbesondere Lötverbindung herzustellen und/oder zu optimieren.

Im Folgenden wird beispielhaft der Betrieb einer erfindungsgemäßen Pfluganlage 1 beschrieben.

Eine Pfluganlage 1 kann beispielsweise mittels durch die Befestigungsaufnahme 8 geführter Befestigungsmittel an einem Pflug angebracht werden.

Wie oben beschrieben, wird der Pflug mit der Pfluganlage 1 in einer Bearbeitungsrichtung durch den Boden gezogen, wodurch eine Furche in den Boden geschnitten wird. Die hierbei entstehenden Kräfte in Richtung des Furchenrandes und in Richtung des Furchengrundes werden zumindest teilweise von der Pfluganlage 1 aufgenommen. Die Pfluganlage 1 liegt hierbei mit ihrer Ableitseite 2 an dem Furchenrand und mit ihrer Unterseite 4 am Furchengrund an. Ableitseite 2 und Unterseite 4 können durch die verwendeten erfindungsgemäßen Verschleißschutzelemente 20 vor Verschleiß geschützt werden.

## Patentansprüche

1. Pfluganlage (1) zur Verwendung mit einem Pflug, wobei die Pfluganlage (1) einen Anlagenkörper (1.1) mit einer Ableitseite (2), einer der Ableitseite (2) gegenüberliegenden Rückseite (3) und einer die Ableitseite (2) und die Rückseite (3) verbindenden Unterseite (4) aufweist, wobei der Anlagenkörper (1.1) Verschleißschutzelement-Aufnahmen (10) aufweist, in denen Verschleißschutzelemente (20) aus Hartmaterial aufgenommen sind,
**dadurch gekennzeichnet,**
**dass** die Verschleißschutzelement-Aufnahmen (10) in die Unterseite (4) eingebracht sind,
und **dass** die Verschleißschutzelemente (20) vorzugsweise als Stifte ausgeführt sind.

2. Pfluganlage (1) nach Anspruch 1,
**dadurch gekennzeichnet,**
**dass** die Verschleißschutzelement-Aufnahmen (10) als Bohrungen ausgeführt sind,
und insbesondere dass die Verschleißschutzelement-Aufnahmen (10) die Ableitseite (2) und die Rückseite (3) nicht schneiden.

3. Pfluganlage (1) nach Anspruch 1 oder 2,
**dadurch gekennzeichnet,**
**dass** an dem Anlagenkörper (1.1) im Bereich der Unterseite (4) ein Absatz (9) vorgesehen ist, derart, dass die Unterseite (4) zumindest teilweise von dem Absatz (9) gebildet ist.

4. Pfluganlage (1) nach einem der Ansprüche 1 bis 3,
**dadurch gekennzeichnet,**
**dass** die Verschleißschutzelemente (20) einen Schaft (21) aufweisen,
**dass** die Verschleißschutzelement-Aufnahmen (10) eine Schaftaufnahme (11) aufweisen, die zumindest teilweise korrespondierend zu dem Schaft (21) ausgebildet ist,
und **dass** der Schaft (21) vorzugsweise vollständig in der Schaftaufnahme (11) aufgenommen ist,
insbesondere, dass die Verschleißschutzelemente (20) in den Verschleißschutzelement-Aufnahmen (10) zumindest teilweise durch eine stoffschlüssige Verbindung, bevorzugt eine Lötverbindung, gehalten sind.

5. Pfluganlage (1) nach einem der Ansprüche 1 bis 4,
**dadurch gekennzeichnet,**
**dass** die Verschleißschutzelemente (20) entlang einer Längserstreckung des Anlagenkörpers (1.1) angeordnet sind, und dass vorzugsweise Abstände (Y20) zwischen den Verschleißschutzelementen (20) konstant oder variabel sind.

6. Pfluganlage (1) nach einem der Ansprüche 1 bis 5,
**dadurch gekennzeichnet,**
**dass** die Verschleißschutzelemente (20) in mindestens einer in Richtung der Längserstreckung verlaufenden Reihe angeordnet sind, wobei die mindestens eine Reihe der Verschleißschutzelemente (20) mittig oder außermittig zwischen Ableitseite (2) und Rückseite (3) angeordnet ist.

7. Pfluganlage (1) nach Anspruch 6,
**dadurch gekennzeichnet,**
**dass** die Verschleißschutzelemente (20) in mehreren Reihen angeordnet sind, dass zwischen den Reihen ein Reihenabstand (Z_20) vorgesehen ist, dass die Abstände (Y20) der Verschleißschutzelemente (20) in den Reihen voneinander abweichen oder gleich sind, bevorzugt dass die Verschleißschutzelemente (20) einer Reihe symmetrisch oder versetzt zu denen zumindest einer anderen Reihe angeordnet sind.

8. Pfluganlage (1) nach einem der Ansprüche 1 bis 7,
**dadurch gekennzeichnet,**
**dass** die Verschleißschutzelement-Aufnahmen (10) senkrecht zu der Unterseite (4) oder in einem Winkel (α) zu der Flächennormalen der Unterseite (4) ausgerichtet sind,
oder dass zumindest eine Verschleißschutzelement-Aufnahme (10) senkrecht zu der Unterseite (4) und zumindest eine Verschleißschutzelement-Aufnahme (10) in einem Winkel (α) zur Flächennormalen der Unterseite (4) ausgerichtet ist.

9. Pfluganlage (1) nach einem der Ansprüche 1 bis 8,
**dadurch gekennzeichnet,**
**dass** die Verschleißschutzelemente (20) ein einseitiges Schaftende (22) und eine gegenüberliegenden Kopffläche (23) aufweisen,
vorzugsweise, dass die Kopffläche (23) zumindest eines Verschleißschutzelements (20) eben ausgebildet ist oder eine Wölbung (23.1), vorzugsweise eine konvexe Wölbung (23.1) aufweist,
und/oder dass das Schaftende (22) zumindest eines Verschleißschutzelements eine Einführfase aufweist.

10. Pfluganlage (1) nach Anspruch 9,
**dadurch gekennzeichnet,**
**dass** in zumindest einer Verschleißschutzelement-Aufnahme (10) zumindest zwei Verschleißschutzelemente (20) aufgenommen und in Richtung der Mittellängsachsen der Verschleißschutzelemente (20) aneinandergereiht sind, wobei vorzugsweise die Kopffläche (23) eines Verschleißschutzelements (20) mittelbar oder unmittelbar mit dem Schaftende (22) eines anderen Verschleißschutzelement (20) in Kontakt steht.

11. Pfluganlage (1) nach Anspruch 9 oder 10,
**dadurch gekennzeichnet,**
**dass** zumindest eines der Verschleißschutzelemente (20) im Bereich der Kopffläche (23) einen Kopf (24) aufweist, der sich an den Schaft (21) mittelbar oder unmittelbar anschließt, wobei der Kopf (24) vorzugsweise einen größeren Außenumfang aufweist als der Schaft (21).

12. Pfluganlage (1) nach Anspruch 11,
**dadurch gekennzeichnet,**
**dass** zumindest eine Verschleißschutzelement-Aufnahme (10) eine Kopfaufnahme (13) aufweist, die zumindest bereichsweise korrespondierend zu dem Kopf (24) ausgebildet ist, wobei der Kopf (24) zumindest teilweise in der Kopfaufnahme (13) aufgenommen ist.

13. Pfluganlage (1) nach Anspruch 11 oder 12,
**dadurch gekennzeichnet,**
**dass** zumindest eines der Verschleißschutzelemente (20) einen Übergangsabschnitt (25) zwischen dem Schaft (21) und dem Kopf (24) aufweist, der vorzugsweise mit kegeliger Außenkontur oder mit konvex oder konkav gewölbter Außenkontur, insbesondere als Verrundung ausgebildet ist.

14. Pfluganlage (1) nach Anspruch 13,
**dadurch gekennzeichnet,**
**dass** zumindest eine Verschleißschutzelement-Aufnahme (10) einen Übergangsbereich (14) aufweist, der korrespondierend zu dem Übergangsabschnitt (25) ausgebildet ist, wobei der Übergangsabschnitt (25) zumindest teilweise in dem Übergangsbereich (14) aufgenommen ist.

15. Pfluganlage (1) nach einem der Ansprüche 11 bis 14,
**dadurch gekennzeichnet,**
**dass** der Kopf (24) zumindest eines Verschleißschutzelements (20) eine Kopf-Mittellängsachse (ML24) aufweist, die zu einer Schaft-Mittellängsachse (ML21) des Schafts (21) beabstandet ist.

16. Pfluganlage (1) nach einem der Ansprüche 11 bis 15,
**dadurch gekennzeichnet,**
**dass** der Kopf (24) eine Kopf-Seitenfläche (24.2) aufweist, die elliptisch oder rotationssymmetrisch, insbesondere als zylindrische oder kegelige Fläche ausgebildet ist,
oder dass der Kopf (24) mehrere Kopf-Seitenflächen (24.2) aufweist, insbesondere dass der Kopf (24) einen polygonalen, besonders bevorzugt einen rechteckigen Querschnitt aufweist.

17. Pfluganlage (1) nach einem der Ansprüche 1 bis 16,
**dadurch gekennzeichnet,**
**dass** die Verschleißschutzelemente (20) aus Hartmetall, vorzugsweise aus Woframcarbid bestehen.

## Claims

1. A landside (1) for use with a plow, wherein the landside (1) has a landside body (1.1) having a diverting face (2), a rear face (3) opposite from the diverting face (2) and an underside (4) connecting the diverting face (2) and the rear face (3), wherein the landside body (1.1) has wear-protection element mounts (10), in which wear-protection elements (20) made of hard material are mounted,
**characterized**
**in that** the wear-protection element mounts (10) are incorporated into the underside (4),
and **in that** the wear-protection elements (20) are preferably designed as pins.

2. The landside (1) according to claim 1,
**characterized**
**in that** the wear-protection element mounts (10) are designed as bores,
and in particular in that the wear-protection element mounts (10) do not intersect the diverting face (2) and the rear face (3).

3. The landside (1) according to claim 1 or 2,
**characterized**
**in that** a shoulder (9) is provided on the landside body (1.1) in the area of the underside (4) in such a way that the underside (4) is at least partially formed by the shoulder (9).

4. The landside (1) according to any of claims 1 to 3,
**characterized**
**in that** the wear-protection elements (20) have a shank (21),
**in that** the wear-protection element mounts (10) have a shank mount (11), which is designed to at least partially match the shank (21),
and **in that** the shank (21) is preferably completely received in the shank mount (11),
in particular in that the wear-protection elements (20) are at least partially held in the wear-protection element mounts (10) by a material bond, preferably a soldered connection.

5. The landside (1) according to any of claims 1 to 4,
**characterized**
**in that** the wear-protection elements (20) are disposed along a longitudinal extent of the landside body (1.1), and in that preferably distances (Y20) between the wear-protection elements (20) are constant or variable.

6. The landside (1) according to any of claims 1 to 5,
**characterized**
**in that** the wear-protection elements (20) are arranged in at least one row extending in the direction of the longitudinal extent, wherein the at least one row of wear-protection elements (20) is arranged centrally or eccentrically between the diverting face (2) and the rear face (3).

7. The landside (1) according to claim 6,
**characterized**
**in that** the wear-protection elements (20) are arranged in several rows, in that a row spacing (Z_20) is provided between the rows, in that the spacings (Y20) of the wear-protection elements (20) in the rows differ from one another or are identical, preferably in that the wear-protection elements (20) of one row are arranged symmetrically or staggered relative to those of at least one other row.

8. The landside (1) according to any of claims 1 to 7,
**characterized**
**in that** the wear-protection element mounts (10) are aligned perpendicular to the underside (4) or at an angle (α) to the surface normal of the underside (4),
or in that at least one wear-protection element mount (10) is aligned perpendicular to the underside (4) and at least one wear-protection element mount (10) is aligned at an angle (α) to the surface normal of the underside (4).

9. The landside (1) according to any of claims 1 to 8,
**characterized**
**in that** the wear-protection elements (20) have a shank end (22) on one side and an opposing head surface (23),
preferably in that the head surface (23) of at least one wear-protection element (20) is plane or has a curvature (23.1), preferably a convex curvature (23.1),
and/or in that the shank end (22) of at least one wear-protection element has an insertion chamfer.

10. The landside (1) according to claim 9,
**characterized**
**in that** at least two wear-protection elements (20) are mounted in at least one wear-protection element mount (10) and are aligned in the direction of the central longitudinal axes of the wear-protection elements (20), wherein the head surface (23) of a wear-protection element (20) is preferably in direct or indirect contact with the shank end (22) of another wear-protection element (20).

11. The landside (1) according to claim 9 or 10,
**characterized**
**in that** at least one of the wear-protection elements (20) has a head (24) in the area of the head surface (23), which head directly or indirectly adjoins the shank (21), wherein the head (24) preferably has a larger outer circumference than the shank (21).

12. The landside (1) according to claim 11,
**characterized**
**in that** at least one wear-protection element mount (10) has a head mount (13), which is designed to at least sectionally match the head (24), wherein the head (24) is at least partially received in the head mount (13).

13. The landside (1) according to claim 11 or 12,
**characterized**
**in that** at least one of the wear-protection elements (20) has a transition section (25) between the shank (21) and the head (24), which transition section is preferably designed having a conical outer contour or having a convex or concave outer contour, in particular is designed as a rounding.

14. The landside (1) according to claim 13,
**characterized**
**in that** at least one wear-protection element mount (10) has a transition area (14), which is designed to match the transition section (25), wherein the transition section (25) is at least partially received in the transition area (14).

15. The landside (1) according to any of claims 11 to 14,
**characterized**
**in that** the head (24) of at least one wear-protection element (20) has a central longitudinal head axis (ML24), which is spaced apart from a central longitudinal shank axis (ML21) of the shank (21).

16. The landside (1) according to any of claims 11 to 15,
**characterized**
**in that** the head (24) has a lateral head surface (24.2), which is elliptical or rotationally symmetrical, in particular in the form of a cylindrical or conical surface, or in that the head (24) has several lateral head surfaces (24.2), in particular that the head (24) has a polygonal, particularly preferably a rectangular cross-section.

17. The landside (1) according to any of claims 1 to 16,
**characterized**
**in that** the wear-protection elements (20) are made of hard metal, preferably of tungsten carbide.

## Revendications

1. Contre-sep (1) destiné à être utilisé avec une charrue, le contre-sep (1) comprenant un corps de contre-sep (1.1) avec un côté de décharge (2), un côté arrière (3) opposé au côté de décharge (2) et un côté inférieur (4) reliant le côté de décharge (2) et le côté arrière (3), le corps de contre-sep (1.1) des logements d'éléments de protection contre l'usure (10) dans lesquels sont logés des éléments de protection contre l'usure (20) en matériau dur,
**caractérisé**
**en ce que** les logements d'éléments de protection contre l'usure (10) sont intégrés sur le côté inférieur (4)
et **en ce que** les éléments de protection contre l'usure (20) sont de préférence réalisés sous forme de broches.

2. Contre-sep (1) selon la revendication 1,
**caractérisé**
**en ce que** les logements d'éléments de protection contre l'usure (10) sont réalisés sous forme d'alésages,
et en particulier en ce que les logements d'éléments de protection contre l'usure (10) ne coupent pas le côté de décharge (2) et le côté arrière (3).

3. Contre-sep (1) selon la revendication 1 ou 2,
**caractérisé**
**en ce qu'**un épaulement (9) est prévu sur le corps du contre-sep (1.1) dans la zone du côté inférieur (4), de telle sorte que le côté inférieur (4) est au moins partiellement formé par l'épaulement (9).

4. Contre-sep (1) selon l'une des revendications 1 à 3,
**caractérisé**
**en ce que** les éléments de protection contre l'usure (20) comportent une tige (21), en ce que les logements d'éléments de protection contre l'usure (10) comportent un logement de tige (11) qui est au moins partiellement formé de manière à correspondre à la tige (21),
et que la tige (21) est de préférence entièrement logée dans le logement de tige (11),
en particulier que les éléments de protection contre l'usure (20) sont maintenus dans les logements d'éléments de protection contre l'usure (10) au moins en partie par une liaison par matière, de préférence une liaison par brasage.

5. Contre-sep (1) selon l'une des revendications 1 à 4,
**caractérisé**
**en ce que** les éléments de protection contre l'usure (20) sont disposés le long d'une extension longitudinale du corps du contre-sep (1.1), et en ce que les distances (Y20) entre les éléments de protection contre l'usure (20) sont de préférence constantes ou variables.

6. Contre-sep (1) selon l'une des revendications 1 à 5,
**caractérisé**
**en ce que** les éléments de protection contre l'usure (20) sont disposés en au moins une rangée s'étendant dans l'extension longitudinale, ladite au moins une rangée d'éléments de protection contre l'usure (20) étant disposée de manière centrée ou excentrée entre le côté de décharge (2) et le côté arrière (3).

7. Contre-sep (1) selon la revendication 6,
**caractérisé**
**en ce que** les éléments de protection contre l'usure (20) sont disposés en plusieurs rangées, en ce qu'il y a un espacement des rangées (Z_20) est prévue entre les rangées, que les distances (Y20) entre les éléments de protection contre l'usure (20) dans les rangées sont différentes les unes des autres ou identiques, de préférence que les éléments de protection contre l'usure (20) d'une rangée sont disposés de manière symétrique ou décalée par rapport à ceux d'au moins une autre rangée.

8. Contre-sep (1) selon l'une des revendications 1 à 7,
**caractérisé en ce que** les logements d'éléments de protection contre l'usure (10) sont orientés perpendiculairement au côté inférieur (4) ou selon un angle (α) par rapport à la normale à la surface du côté inférieur (4),
ou **en ce qu'**au moins un logement d'élément de protection contre l'usure (10) est orienté perpendiculairement au côté inférieur (4) et au moins un logement d'élément de protection contre l'usure (10) est orienté selon un angle (α) par rapport à la normale à la surface du côté inférieur (4).

9. Contre-sep (1) selon l'une des revendications 1 à 8,
**caractérisé**
**en ce que** les éléments de protection contre l'usure (20) présentent une extrémité de tige unilatérale (22) et une surface de tête opposée (23),
de préférence en ce que la surface de tête (23) d'au moins un élément de protection contre l'usure (20) est plane ou présente une courbure (23.1), de préférence une courbure convexe (23.1),
et/ou que l'extrémité de tige (22) d'au moins un élément de protection contre l'usure présente un chanfrein d'insertion.

10. Contre-sep (1) selon la revendication 9,
**caractérisé**
**en ce qu'**au moins deux éléments de protection contre l'usure (20) sont logés dans au moins un logement d'élément de protection contre l'usure (10) et sont alignés dans la direction des axes longitudinaux centraux des éléments de protection contre l'usure (20), la surface de tête (23) d'un élément de protection contre l'usure (20) étant de préférence en contact direct ou indirect avec l'extrémité de tige (22) d'un autre élément de protection contre l'usure (20).

11. Contre-sep (1) selon la revendication 9 ou 10,
**caractérisé**
**en ce qu'**au moins l'un des éléments de protection contre l'usure (20) présente, dans la zone de la surface de tête (23), une tête (24) qui se raccorde directement ou indirectement à la tige (21), la tête (24) présentant de préférence une circonférence extérieure plus grande que la tige (21).

12. Contre-sep (1) selon la revendication 11,
**caractérisé**
**en ce qu'**au moins un logement d'élément de protection contre l'usure (10) présente un logement de tête (13) qui est formé au moins par endroits de manière à correspondre à la tête (24), la tête (24) étant logée au moins en partie dans le logement de tête (13).

13. Contre-sep (1) selon la revendication 11 ou 12,
**caractérisé**
**en ce qu'**au moins l'un des éléments de protection contre l'usure (20) comporte une section de transition (25) entre la tige (21) et la tête (24), qui est de préférence conçue avec un contour extérieur conique ou avec un contour extérieur bombé de manière convexe ou concave, en particulier sous forme d'arrondi.

14. Contre-sep (1) selon la revendication 13,
**caractérisé**
**en ce qu'**au moins un logement d'élément de protection contre l'usure (10) présente une zone de transition (14) qui est conçue de manière à correspondre à la section de transition (25), la section de transition (25) étant au moins partiellement logée dans la zone de transition (14).

15. Contre-sep (1) selon l'une des revendications 11 à 14,
**caractérisé**
**en ce que** la tête (24) d'au moins un élément de protection contre l'usure (20) présente un axe longitudinal central de tête (ML24) qui est espacé d'un axe longitudinal central de tige (ML21) de la tige (21).

16. Contre-sep (1) selon l'une des revendications 11 à 15,
**caractérisé**
**en ce que** la tête (24) présente une surface latérale de tête (24.2) qui est elliptique ou à symétrie de révolution, en particulier sous forme de surface cylindrique ou conique,
ou en ce que la tête (24) présente plusieurs surfaces latérales de tête (24.2), en particulier en ce que la tête (24) présente une section transversale polygonale, de préférence rectangulaire.

17. Contre-sep (1) selon l'une des revendications 1 à 16,
**caractérisé**
**en ce que** les éléments de protection contre l'usure (20) sont en métal dur, de préférence en carbure de tungstène.
